(19) **Europäisches Patentamt**
**European Patent Office**
**Office européen des brevets**

(11) **EP 3 147 898 A1**

(12) # EUROPEAN PATENT APPLICATION

(43) Date of publication:
**29.03.2017 Bulletin 2017/13**

(51) Int Cl.:
*G10L 15/25* *(2013.01)*    *G10L 21/0216* *(2013.01)*

(21) Application number: **15460079.5**

(22) Date of filing: **23.09.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Politechnika Gdanska
80-233 Gdansk (PL)**

(72) Inventors:
- **CZYZEWSKI, Andrzej
  81-577 Gdynia (PL)**
- **BRATOSZEWSKI, Piotr
  80-177 Gdansk (PL)**
- **LOPATKA, Kuba
  80-288 Gdansk (PL)**
- **KOTUS, Józef
  81-008 Gdynia (PL)**
- **SZWOCH, Grzegorz
  80-335 Gdansk (PL)**

(54) **METHOD AND SYSTEM FOR IMPROVING THE QUALITY OF SPEECH SIGNALS IN SPEECH RECOGNITION SYSTEMS**

(57) A method for improving the quality of a speech signal in a speech recognition system, comprising recording a user's face and generating signals detecting the face and the activity of the mouth.

Fig. 1

# Description

The present invention relates to a method and system for improving the quality of the speech signal in speech recognition systems, particularly in communication with the self-acting machine, which can be also designed for use in remote multimedia conferences.

In conventional electronic devices common method of human communication with the device is voice communication. Existing methods of speech recognition, speaker and voice commands, achieve high performance in good acoustic conditions. In the presence of undesirable sounds in the environment, speech recognition is becoming a serious challenge. Example usage scenarios, where strong interference is in place, are using the device on the street, airport, airplane, or controlling the on-board computer in a car. The factors significantly deteriorating the quality of the audio signal are especially the additive noise and the presence of other sources of speech. There is a research carried out on methods for ways to improve the quality of the speech signal, aimed at eliminating the negative impact of interference, reducing the effectiveness of speech recognition, speaker or overall intelligibility of the speech signal. One of the important trends is to join the information coming from the modality of acoustic data obtained from visual modality. The video signal is not degraded as a result of the above factors deteriorating the quality of the audio signal. Patent US6314396 discloses a device for automatic gain control in the phonic unit used in automatic speech recognition. On the basis of the audio signal parameters, the detection of signal identical with speech occurs, then according to the results of the detection signal normalization occurs in order to attenuate the non-speech parts of signal and amplify the speech parts. So processed signal is transmitted to the speech recognition module.

Patent US6731334 is known to improve the speech quality system consisting of an array of microphones which are targeting the active speaker. The proposed use of the system is a video conferencing system with multiple users. By using information from the microphone array it is possible to limit the number of cameras by directing their position at the active speaker.

Patent US7684982 discloses a device using a camera and microphone in order to improve the quality of recorded speech signal. Through the analysis of the camera image, the face and mouth activity are localized, identical to the activity of the speaker voice. Portions of the signal corresponding to the speech are found using parameters extracted from the audio signal and video. Fragments containing the speech signal are used to sample the background noise signal and the noise prevailing in the environment. The obtained samples of the noise are used to filter the speech signal by spectral subtraction.

A system and method using video and acoustic sensors to monitor vehicle functions and to recognize voice commands is disclosed in Patent US20140214424.

The arrangement shown is used to determine which passenger is currently issuing voice commands; automatic lowering the volume of sound system installed in the car during the formation of expression; automatic speech recognition.

System for processing the speech signal in issuing voice commands by a user of the car inside or outside the vehicle is disclosed in Patent US20080154613. The invention includes the use of sensors included in the Parking Assist system (proximity electronic key, ultrasonic sensors, optical sensors) to determine the position of the vehicle operator, to automatically increase the sensitivity of the microphones zone, where it reaches the user's voice. Voice command controls the vehicle functions such as opening/closing doors/windows, voice recognition of the owner of the car or can be defined by the user.

A method for improving the quality of the speech signal in the speech recognition systems, particularly in the human interaction with self-acting machine, which is received from an audio receiver, using the method comprising recording the user's face by the video decoder and generating signals locating the face and the activity of the mouth, is characterized in that face detection system implements the first algorithm executing the task of locating the face in the video signal. The mouth detection unit implements the second algorithm realizing the detection of mouth activity in the video signal depicting the facial area, and implements the third algorithm for implementing the activity measurement based on an estimate of lip contour around the inner edge of the upper and lower lips. To an audio receiver, preferably arrays of microphones or sonic tension meter, connected to the directional filtration system, which implements the fourth algorithm realizing spatial filtering. The signal showing the location of the face is transferred from the face detection unit to the unit of directional filtering, and the signal containing information about the mouth activity is transferred from the mouth detection unit to the amplitude modulator. The speech signal received from an audio receiver is subjected to spatial filtration in a unit of directional filtering. The filtered speech signal is fed to the amplitude modulator, which interferes with the amplitude value of the transmitted filtered speech signal in such a manner that portions of the time containing the speech signal are reset, and at the same time the system is amplifying the favorably filtered speech signal recorded at the moments of time in which with and aid of the third algorithm the mouth activity is detected, and the resulting modified speech signal, is favorably forwarded to the speech recognition, from which the favorably recognized command is sent to the execution unit of the self-acting machine.

Favorably, from the unit of special filtering, the filtered speech signal is fed to the unit of noise reduction occurring in the acoustic environment. In the noise reduction system, using the resulting filtered speech signal, with an aid of the fifth algorithm using a signal comprising information about the activity of the mouth, the system selects the time intervals in which no mouth activity is detected and determines the noise spectrum occurring in these time intervals. Profile noise is calculated in frequency bands, preferably using Fourier transform. Then the system removes the noisiness of the useful signal using the spectral subtraction of noise from the modified speech signal, or by adaptive filtering. The filtered speech signal is fed to the amplitude modulator by means of which the system removes artifacts resulting from the signal fragments not containing the speech after the spatial and spectral filtering.

A system for improving the quality of the speech signal in speech recognition systems, particularly in the human interaction with self-acting machine, comprising an audio receiver connected to the spatial filtering system and a video receiver connected to the face detection unit, which is connected to the spatial filtering system, according to the invention is characterized in that the face detection system is connected to a mouth detection system mouth, which is connected to an amplitude modulator, which is connected to the spatial filtering system.

Favorably the spatial filtering unit is connected to an amplitude modulator through the interference control system which is connected to the mouth detection unit.

In the method of the invention, the method of treating an audio signal based on sampling the volume has been applied, in contrast to the spatial sampling of acoustic pressure. In this method the spatial filtering in the domain of frequencies based on signals from a vector acoustic sensor was introduced. Use of the sensor and the depth and the three-dimensional image processing, in contrast to the known solutions based on a two-dimensional signal has contributed to improvement of quality of speech signal filtering.

As a result of the use of the invention, a higher quality speech signal in terms of dynamics, especially of the useful signal-interference, is obtained, so that it is possible to execute precisely the voice commands by a self-acting machine. When using the invention in multimedia conferences, and improved quality of the speech signal is obtained.

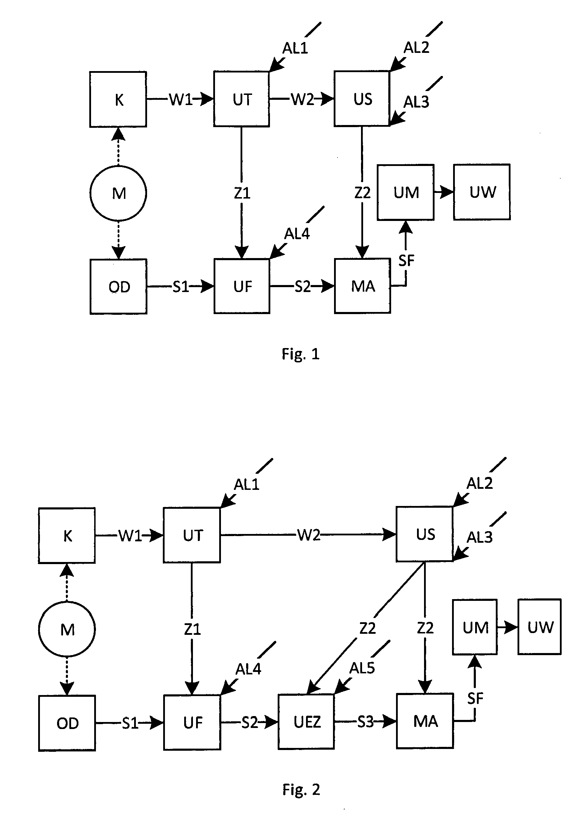

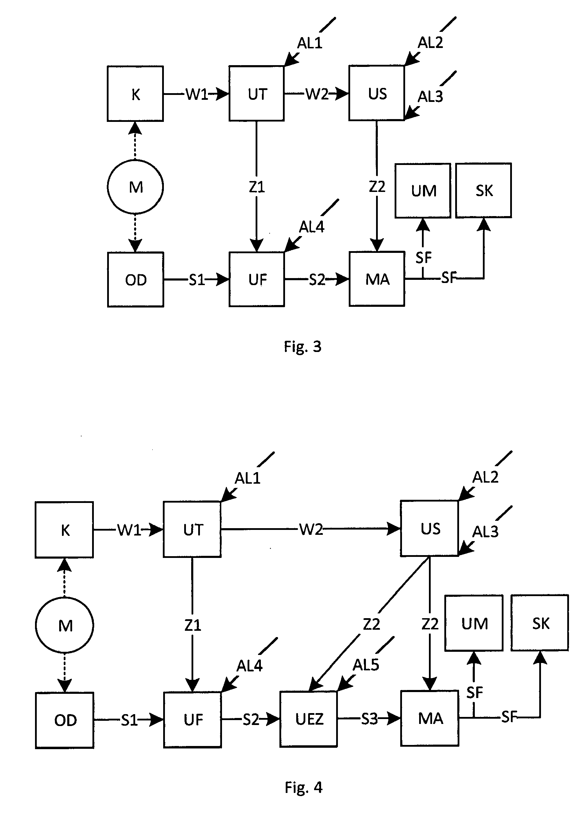

The invention is described in more detail in the embodiments and the drawings, in which fig. 1 shows a block diagram of the method applied to human interaction with self-acting machine, and fig. 2 is a block diagram developing further information on a method depicted in fig. 1, fig. 3 shows a block diagram application for use in multimedia conferences, fig. 4 is a block diagram developing further the information of the method shown in fig. 3.

Embodiment 1

Use of the invention for human interaction with a self-acting machine

As shown in FIG. 1, a system for improving the quality of the speech signal consists of an audio receiver IP as an array of microphones, combined with a spatial filtering system UF and video decoder K connected to the face detection unit UT, which is connected to the spatial filtering unit UF.

UT face detection unit is connected to mouth detection unit, which is connected to an amplitude modulator MA, which is connected to the spatial filtering unit UF.

The face detection system UT implements the first algorithm ALI executing the task of locating the face in the video signal W1.

The mouth detection unit US implements a second algorithm AL2 executing the mouth activity detection in the video signal W1 illustrating the facial area, and implements a third algorithm AL3 executing the measurement of the mouth activity based on the estimate of the lip contour around the inner edge of the upper and lower lip.

To the sound receiver OD in the form of sonic tension meter, the directional filtration unit UF is connected, in which the fourth algorithm AL4 is implemented that performs spatial filtering.

During recording of the image containing the face by the video decoder K, using the mouth detection unit US the position of the mouth is defined, and then within the same mouth detection unit US the mouth activity is determined. The signal showing the location of the face Z1 is sent to the directional filtering unit, and the signal containing information about the mouth activity Z2 is sent to the amplitude modulator MA.

The speech signal received from an array of microphones OD is spatially filtered in the directional filtering unit UF. Spatial filtering is performed in the frequency domain by calculating a spectral distribution of angles of attack of the sound in the plane of azimuth and elevation. Then, for a given frequency band of signal received by the audio receiver unit OD of a center frequency f signal is processed according to the formula:

$$S_2(f) = S_1(f) * w(f)$$

Where $S_2(f)$ is a signal in a band around the frequency $f$ after the spatial filtration, $S_1(f)$ is the received signal, and $w(f)$ is the weighing function, in example given by:

$$w(f) = 0.5 + 0.5 \cos[\varphi(f) - \alpha]$$

where $\varphi(f)$ is the angle of incidence of the sound wave frequency band with a center frequency f in the azimuth plane, and the angle $\alpha$ determines the direction in which the speaker is detected on the basis of the video signal.

The resulting filtered speech signal S2 is fed to the amplitude modulator MA, which interferes with the amplitude sent to the filtered speech signal S2 in such a manner that portions of the time containing the speech signal are reset, and at the same time is amplifies the filtered speech signal S2 recorded at the moments of time, wherein using a third algorithm AL3 detects the activity of the mouth.

The resulting modified speech signal SF, shall be forwarded to the speech recognition unit UM.

In order to make the machine recognize voice commands using the phonic-visual method, the user M is set in the camera view and articulates a statement. The nature of the system operation allows to use the system in noise acoustic conditions, for example when in the sound environment there are interferences from other people's conversations or car noise, industrial noise and other, as well as in conditions free from the interference. User statement consists of voice commands of any content, in language supported by the voice recognition system UM. Voice recognition system UM recognizes a speech at the close interval after the speaker finishes the statement, preferably in real time. The result of command recognition launches the appropriate functionality of self-acting machine with the use of the execution unit UW depending on the recognized command. Computer user can, depending on their needs or situation, articulate various commands to the self-acting machine. AS far as controlling a PC, the functionalities can relate to, for example: opening a text document for editing, saving or printing the document.

Embodiment 2

The improvement of the invention described in Embodiment 1.

The system is built as described in Embodiment 1, except that spatial filtering unit UF is connected to an amplitude modulator MA via the noise control unit UEZ, which is connected to the mouth detection unit US.

A method of improving the quality of the speech signal is carried out as described in Embodiment 1, except that from the spatial filtering unit UF, the filtered speech signal S2 is directed to unit UEZ controlling the noise that is present in the acoustic environment. From the resulting filtered speech signal S2, using implemented fifth algorithm AL5 through the signal comprising information about the mouth activity Z2 the moments in time are selected at which there was no detectable mouth activity and the noise spectrum is determined.

Then the noisiness of the useful signal is removed with the use of spectral noise subtraction from the modified speech signal S2. Improved speech signal S3 is fed to the amplitude modulator MA, which removes the artifacts resulting from the sound fragment not containing speech after spatial and spectral filtering.

Embodiment 3

Use of the invention for use in a multimedia conference

For the purpose of multimedia conferencing, a method and system described in Embodiment 1, except that the amplitude modulator MA is accompanied with the voice recognition system UM or the signal is transmitted to the computer network SK.

In order to improve the quality of the speech signal in the speech recognition system and communication using the phonic-visual method, user or users must be visible in the camera view at the time the statement was formulated. The nature of operation of the system allows to use the system in noise acoustic conditions, for example when the environment has interference from other people's conversations or noise coming from the car, industrial noise or other, as well as the conditions free of acoustic noise. The system of the invention automatically increases the sensitivity of the microphones on the person currently speaking, through the use of feedback from mouth activity detector, which transmits information about the position of the active speaker. User speech signal can be fed to the speech recognition unit UM or in the improved form sent to a computer network SK and received by the conference co-participants. In the case of input sent to the speech recognition unit UM, it recognizes speech in short time after the speaker finished articulation or in real-time, and the recognition result can be sent as text to a computer network SK or displayed on the screen.

Embodiment 4

The improvement of the invention described in Embodiment 3.

For the purpose of multimedia conferencing, a method and system described in Embodiment 2, the amplitude modulator MA is accompanied by a voice recognition unit UM or the signal is transmitted to the computer network SK.

**Claims**

1. A method for improving the quality of the speech signal in the speech recognition systems, particularly in the human interaction with self-acting machines, which is received from an audio receiver (OD), comprising recording the user's face by the video decoder (K) and generating signals locating the face and the mouth activity, **characterized in that** the face detection unit (UT) implements the first algorithm (AL1) executing the task of locating the face in the video signal (W1) and a mouth detection unit (US) implements a second algorithm (AL2) executing the task of detecting mouth activity in the video signal (W1) depicting the facial area and implements a third algorithm (AL3) pursuing measuring the mouth activity based on an estimate of lip contour around the inner edge of the upper and lower lips, and to an audio receiver (OD), preferably array of microphones or acoustic tension meters, to which directional filtering (UF) unit is connected, which implements the fourth algorithm (AL4) implementing the spatial filtering, and then a signal including location information of the face (Z1) is transferred from the face detection (UT) to the directional filtering (UF), and a signal containing information about the activity of the mouth (Z2) is sent from the mouth detection unit (US) to the amplitude modulator (MA), while speech signal (S1) received from the audio receiver (OD) is subjected to spatial filtering in a directional filtering unit (UF) and the filtered speech signal (S2) is fed to the amplitude modulator (MA), in which the filtered speech signal (S2) amplitude is altered, in such a manner that portions of the signal containing the speech are reset, and at the same time it strengthens the preferably filtered speech signal (S2) recorded in moments of time in which with using a third algorithm (AL3) the mouth activity is detected, and the resulting modified speech signal (SF), is preferably transmitted to the speech recognition (UM), from which the preferably recognized command shall be submitted to the execution unit (UW) of a self-acting machine.

2.  A method according to claim 1, **characterized in that** from the spatial filtration (UF), the filtered speech signal (S2) is directed to the unit eliminating noise (UEZ) present in the acoustic environment, in which the resulting filtered speech signal (S2), using implemented fifth algorithm (AL5) using a signal with information about the mouth activity (Z2) time intervals with no detectable mouth activity are selected and the spectrum of noise occurring in these time intervals is determined, followed by removal of noise from the useful signal with the use of spectral subtraction of noise from the modified speech signal (S2) or by adaptive filtering, and then filtered speech signal (S3) is fed to the modulator amplitude (MA), which removes sound artifacts resulting from the signal portion containing the speech after spatial and spectral filtering.

3.  A unit for improving the quality of the speech signal in the speech recognition system, particularly in the human interaction with self-acting machines, comprising an audio receiver (OD), coupled with a spatial filtering unit (UF) and a video receiver (K) connected to the face detection unit (UT), which is connected to the spatial filtering unit (UF), **characterized in that** the face detection unit (UT) is connected to the mouth detection unit (US) which is connected to the amplitude modulator (MA), which is connected with the spatial filtering unit (UF).

4.  The system according to claim. 3 **characterized in that** the spatial filtering unit (UF) is connected to an amplitude modulator (MA) through the noise control unit (UEZ), which is connected to the mouth detection unit (US).

Fig. 1

Fig. 2

Fig. 3

Fig. 4

Europäisches
Patentamt
European
Patent Office
Office européen
des brevets

# EUROPEAN SEARCH REPORT

Application Number

EP 15 46 0079

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/337016 A1 (HERBIG TOBIAS [DE] ET AL) 13 November 2014 (2014-11-13) * paragraphs [0033], [0034], [0082], [0084], [0086], [0093], [0094], [0126]; figure 1 * ----- | 1-4 | INV. G10L15/25 ADD. G10L21/0216 |

TECHNICAL FIELDS
SEARCHED (IPC)

G10L

The present search report has been drawn up for all claims

| Place of search | Date of completion of the search | Examiner |
|---|---|---|
| Munich | 24 February 2016 | Zimmermann, Elko |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 46 0079

This annex lists the patent family members relating to the patent documents cited in the above-mentioned European search report.
The members are as contained in the European Patent Office EDP file on
The European Patent Office is in no way liable for these particulars which are merely given for the purpose of information.

24-02-2016

| Patent document cited in search report | Publication date | Patent family member(s) | Publication date |
|---|---|---|---|
| US 2014337016 A1 | 13-11-2014 | EP 2766901 A1<br>US 2014337016 A1<br>WO 2013058728 A1 | 20-08-2014<br>13-11-2014<br>25-04-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6314396 B
- US 6731334 B
- US 7684982 B
- US 20140214424 A
- US 20080154613 A